# EUROPÄISCHE PATENTSCHRIFT

(11) **EP 2 106 222 B1**
(45) Veröffentlichungstag und Bekanntmachung des Hinweises auf die Patenterteilung: **15.08.2012**
(21) Anmeldenummer: 08801737.1
(22) Anmeldetag: 28.08.2008
(51) Int. Cl.: A45D 40/26, A46B 9/02, B29C 45/16, A45D 33/18, A45D 40/00

(54) **TEIL EINER KOSMETIKEINHEIT**
PART OF A COSMETIC UNIT
PARTIE D'UNE UNITÉ COSMÉTIQUE

(30) Priorität: 31.08.2007 EP 07017046
(43) Veröffentlichungstag der Anmeldung: 07.10.2009
(73) Patentinhaber: GEKA GmbH, 91572 Bechhofen (DE)
(72) Erfinder: SCHWAB, Friedrich, 91623 Sachsen (DE); WOLFSGRUBER, Dieter, 91595 Burgoberbach (DE)
(74) Vertreter: Misselhorn, Hein-Martin
(86) Internationale Anmeldenummer: PCT/EP2008/007052
(87) Internationale Veröffentlichungsnummer: WO 2009/030426

(56) Entgegenhaltungen:
- EP-A- 1 752 063
- EP-A- 1 935 279
- WO-A-00/54623
- WO-A-2006/013408
- WO-A-2008/069354

## Beschreibung

Die Erfindung richtet sich auf ein Teil einer Kosmetikeinheit, insbesondere einen Applikator, vorzugsweise ein Bürstchen, einen Behälter, eine Verschlusskappe oder einen Abstreifer, das aus zwei unterschiedlichen Kunststoff-Komponenten besteht. Applikatoren können neben Bürstchen auch solche für Lippen- und Augenkosmetik sein.

Es ist z.B. aus EP 1 161 159 B1 bekannt, Kosmetikeinheiten aus Kunststoff durch Spritzgießen herzustellen. Bei diesen im sogenannten Zwei-Komponenten-Spritzgießverfahren hergestellten Bürstchen wird aus einem relativ harten Kunststoff ein stabiler Kern gespritzt und aus einem relativ weichen Kunststoff wird über diesen Kern ein Borstenkörper gespritzt. Um den Borstenkörper relativ zu dem harten Kern axial zu fixieren, ist es beispielsweise bekannt, am Kern Hinterschneidungen vorzusehen oder endseitig Fixierungskappen oder dergleichen aufzusetzen. Ein ähnlich aufgebautes Bürstchen ist z.B. auch in der EP 1 752 063 A 1 beschrieben.

Charakteristisch für diese bekannten Produkte ist, dass die Geometrie des ersten Materials nur teilweise bzw. abschnittsweise von dem zweiten oder auch dritten Material umhüllt wird und je nach Anzahl der unterschiedlichen Materialien zwei oder drei Anspritzpunkte an unterschiedlichen Stellen vorgesehen sind. Üblicherweise hängt dabei die Anzahl der Formkavitäten von der Anzahl der Materialien und von den mit den unterschiedlichen Materialien abzuformenden Geometrien ab. Wird beispielsweise ein 8-fach-Werkzeug für einen 2-Komponenten-Lippenapplikator ausgelegt, sind acht Formkavitäten für die erste Materialkomponente und -geometrie und acht weitere Kavitäten für die zweite Materialkomponente und -geometrie erforderlich.

Hierdurch sind verschiedene Nachteile hinsichtlich der fertigen Produkte bedingt, wie z.B. mehr als ein Anspritzpunkt sowie Abdrücke von Werkzeugtrennungen und -auswerfergeometrien, die sich nachteilig für die Applikationsfunktion und/oder unter visuellen Gesichtspunkten auswirken.

Hiervon ausgehend liegt der Erfindung die Aufgabe zugrunde, ein Teil einer Kosmetikeinheit der eingangs genannten Art, insbesondere ein Bürstchen, im Zwei-Komponenten-Spritzgießverfahren herzustellen und so auszugestalten, dass über die herkömmlicherweise bei einem solchen Verfahren aus den unterschiedlichen Materialeigenschaften der beiden Komponenten resultierenden Gegebenheiten zusätzliche Vorteile erreicht werden.

Diese Aufgabe wird erfindungsgemäß durch ein Teil einer Kosmetikeinheit entsprechend den Merkmalen des Hauptanspruchs gelöst. Bei dem erfindungsgemäßen Teil einer Kosmetikeinheit handelt es sich um ein Sandwich-Spritzgussteil, bei dem eine erste innere Kunststoff-Komponente mittels eines einzigen gemeinsamen Anspritzpunktes in eine zweite äußere Kunststoff-Komponente eingespritzt ist. Dadurch liegen die erste innere Kunststoff-Komponente und die zweite äußere Kunststoff-Komponente überall, d.h. insbesondere über die gesamte Grenzfläche zwischen beiden Kunststoff-Komponenten hinweg, konturgenau aneinander, und ein Verbindungsbereich zwischen der ersten inneren Kunststoff-Komponente und der zweiten äußeren Kunststoff-Komponente ist überall spaltfrei ausgebildet. Weiterhin umgibt die zweite äußere Kunststoff-Komponente die erste innere Kunststoff-Komponente im Wesentlichen, d.h. höchstens abgesehen von dem Anspritzpunkt, vollständig. Außerdem liegen zwischen der ersten inneren Kunststoff-Komponente und der zweiten äußeren Kunststoff-Komponente ein homogen geschlossener und inniger Verbund sowie eine formschlüssige und ohne zusätzliche Sicherungsmaßnahmen dauerhaft stabile Verbindung vor. Darüber hinaus hat das Sandwich-Spritzgussteil ein Gesamtgewicht von höchstens 10 g (Gramm).

Wenn im Vorstehenden von "im Wesentlichen" vollständig Umgeben die Rede ist, bedeutet dies vor allem, dass im Bereich des Anspritzpunktes die innere Kunststoff-Komponente möglicherweise geringfügig von außen zugänglich ist, wenn nicht, wie nachstehend beschrieben von einer gezielten Abdeckung in einem weiteren Verfahrensschritt Gebrauch gemacht wird.

Soweit hier und im Folgenden von zwei Material-Komponenten die Rede ist, ist dies so zu verstehen, dass wenigstens zwei Komponenten verarbeitet werden, dass aber natürlich beispielsweise auch noch eine dritte oder noch weitere Komponenten eingesetzt werden können.

Vorzugsweise erfolgt die Herstellung eines erfindungsgemäßen Teils durch ein spezielles Spritzgießverfahren, das die genauen Einspritzzeiten der beiden Kunststoff-Komponenten durch ein und denselben Ausschnitt im Werkzeug wechselweise präzise steuert, insbesondere die Dosiermenge, Einspritzzeit und Einspritzdauer.

Bei einem solchen Sandwich-Spritzgießen wird in eine äußere Kunststoff-Komponente ein Kern aus einer weiteren inneren Kunststoff-Komponente eingebracht. Die Prozessführung verläuft hierzu in zwei bzw. drei Stufen. Zunächst wird die Kavität der Spritzgießform mit dem Material der Außenhaut, also mit der äußeren Kunststoff-Komponente, teilgefüllt und anschließend die Kernkomponente (= innere Kunststoff-Komponente) durch die noch plastische Seele des bereits eingebrachten Materials (= äußere Kunststoff-Komponente) nachgespritzt. Beide Kunststoff-Komponenten werden dabei durch dieselbe Düse eingespritzt. Demnach gibt es für beide Kunststoff-Komponenten am hergestellten Teil auch nur einen einzigen gemeinsamen Anspritzpunkt.

An diesem Anspritzpunkt kann zum Abschluss in der optionalen dritten Bearbeitungsstufe mit dem Material der äußeren Kunststoff-Komponente ein Verschluss im Anguss- oder Einspritzbereich erzeugt werden. So wird verhindert, dass das Kernmaterial, also die innere Kunststoff-Komponente, an der Oberfläche des hergestellten Teils sichtbar und/oder zugänglich bleibt. Zugleich wird dadurch das Anguss- bzw. Einspritzsystem für den nächsten Schuss gereinigt.

Bei einem so hergestellten Teil einer Kosmetikeinheit, insbesondere Bürstchen, z.B. Mascara-Bürstchen oder Haarfärbe-Bürstchen, werden die an sich bekannten Vorteile einer weichen äußeren Komponente und eines stabilen inneren Kerns erreicht, darüber hinaus wird aber gleichzeitig eine absolut zuverlässige axiale Fixierung erzielt, ohne dass es hierzu spezieller konstruktiver Änderungen oder zusätzlicher Herstellungsschritte bedürfte.

Aufgrund der beiden vorgesehenen unterschiedlichen Kunststoffkomponenten kann eine sehr vorteilhafte Funktionsentkopplung und damit ein verbessertes Design des jeweiligen Teils der Kosmetikeinheit erreicht werden. So wird z.B. die äußere Kunststoff-Komponente entsprechend der gewünschten Oberflächenbeschaffenheiten, wie Kratzfestigkeit, Haptik und/oder optische Erscheinung, gewählt. Die innere Kunststoff-Komponente kann dagegen hinsichtlich völlig anderer Eigenschaften, wie beispielsweise hinsichtlich der mechanischen Stabilität des Sandwich-Spritzgussteils, ausgewählt werden.

Der Übergang zwischen den beiden Kunststoff-Komponenten ist stets homogen geschlossen und zwar insbesondere über die gesamte zwischen den beiden Kunststoff-Komponenten gebildete Grenzfläche hinweg. Es liegt ein homogen geschlossener Verbund zwischen den beiden Kunststoff-Komponenten vor. Die Verbindung ist absolut spaltfrei. Selbst bei hochauflösenden Schnittaufnahmen zeigen sich an der Grenze zwischen den beiden Kunststoff-Komponenten keinerlei Spalte oder offene Poren. Dies gilt bis in den µm-Bereich. Es sind also auch keine Spalte oder Poren im Größenbereich einiger weniger µm bis zu 10 µm festzustellen.

Ein wesentlicher Aspekt der Erfindung liegt auch in der Erkenntnis, dass sich Kunststoffteile mit einem Gesamtgewicht von weniger als 10 g und insbesondere von sogar weniger als 5 g als Sandwich-Spritzgussteile ausführen lassen.

Gemäß einer günstigen Ausgestaltung haben die beiden Kunststoff-Komponenten jeweils eine Härte, die im Bereich zwischen Shore A 40 und Shore D 95 liegt. Das gilt bei einem als Bürstchen ausgeführten Sandwich-Spritzgussteil sowohl für das außen liegende Bostenmaterial als auch für das innen liegende Kernmaterial.

Gemäß einer weiteren günstigen Ausgestaltung ist die zweite äußere Kunststoff-Komponente weicher als die erste innere Kunststoff-Komponente. Bei den erfindungsgemäßen Sandwich-Spritzgussteilen einer Kosmetikeinheit ist eine weiche, äußere Komponente aufgrund von deren Nachgiebigkeit von Vorteil, da dann mit einem größeren Übermaß gearbeitet werden kann, was insbesondere insoweit vorteilhaft ist, wenn es gilt, zwei Bauteile ineinander zu verrasten. Darüber hinaus wird hierdurch eine Montagevereinfachung erzielt. Eine weiche äußere Kunststoff-Komponente wirkt sich auch bezüglich der verschiedenen möglichen Montagegeometrien vorteilhaft aus.

Gemäß einer weiteren günstigen Ausgestaltung ist die zweite äußere Komponente transparent oder transluzent. Dadurch kann man besondere optische Effekte und vor allem eine besonders ansprechende äußere Erscheinung erreichen. Bei Bedarf können auch Barrierewerkstoffe zumindest einer der beiden Kunststoff-Komponenten zugesetzt werden. Außerdem kann die äußere Kunststoff-Komponente auch so gewählt werden, dass eine anschließende Dekoration, z.B. in Form einer Heißfolienprägung oder mittels Siebdruck und eine eventuelle Beschichtung unterstützt wird, z.B. durch Verwendung von transparentem ABS (= Acrylnitril-Butadien-Styrol).

Gemäß einer weiteren günstigen Ausgestaltung hat die zweite äußere Kunststoff-Komponente einen niedrigeren Reibungskoeffizienten als die erste innere Kunststoff-Komponente. Ein so ausgelegtes Sandwich-Spritzgussteil lässt sich besonders gut und ohne Zusatzhilfsmittel relativ zu einem anderen Bauteil bewegen. Insbesondere lässt sich so eine sehr leicht gängige Schraubverbindung zwischen zwei Bauteilen realisieren.

Mit Vorteil kann weiterhin vorgesehen sein, dass sich bei einem Bürstchen der Anspritzpunkt im Bereich einer Stirnseite eines Kerns des Bürstchens oder seitlich eines Stielansatzes des Bürstchens befindet und/oder der Auswerfer zum Auswerfen des gespritzten Bürstchens aus der Spritzgießform an einer Stirnseite des Kerns oder eines Stielansatzes angreift.

Auf diese Weise ist es möglich, äußerst filigrane Bürstchen für kosmetische Zwecke mit einer Vielzahl sehr feiner Borsten zu spritzen, ohne dass der Borstenbesatz durch einen Anspritzpunkt unterbrochen bzw. durch einen Auswerfer beschädigt wird.

Wenn ein derartiges Bürstchen in Verlängerung des Borstenbesatzes in an sich bekannter Weise einen Stielansatz aufweist, der durch eine Verlängerung des Kerns gebildet wird, ist es erfindungsgemäß vorgesehen, auch diesen Stielansatz mit der äußeren Kunststoff-Komponente zu umspritzen. Bei einer anderen Variante des erfindungsgemäßen Bürstchens kann auch vorgesehen sein, dass der Bürstenkörper ganz aus der äußeren Kunststoff-Komponente besteht und lediglich ein hiervon umgebener Stielansatz aus einer härteren Kunststoff-Komponente vorgesehen ist. Jedenfalls besteht der Stielansatz zu einem Teil aus der ersten Kunststoff-Komponente und zu einem anderen Teil aus der zweiten Kunststoff-Komponente.

Die erfindungsgemäße Ausgestaltung ist nicht auf bestimmte Bürstchen beschränkt, eignet sich jedoch besonders für feingliedrige bzw. feinstrukturierte Bürstchen, wobei es außerordentlich überraschend ist, dass die Durchführung des Sandwichverfahrens bei derartigen Bürstchen überhaupt möglich ist.

Bevorzugt sind Bürstchen mit bis zu 2.000 Borsten pro Besatz, wobei sich die Borsten günstigerweise zum freien Ende hin konisch verjüngen und an der Basis einen Umkreis mit einem Radius von 0,15 mm bis 1,0 mm aufweisen. Die Länge der Borsten kann zwischen 0,5 mm und 8,0 mm liegen und die Spitzen können abgerundet sein, z.B. mit einem Radius von 0,025 mm bis 0,40 mm.

Soweit die Borsten einen nicht-kreisförmigen Basisquerschnitt aufweisen, ist vorgesehen, dass sich diese unter Beibehaltung des Querschnitts ebenfalls zur Spitze hin verjüngen. Alternativ kann auch vorgesehen sein, dass sich der Querschnitt zur Spitze hin verändert.

Der wechselseitige Abstand der Borsten (= Borstenabstand zwischen benachbarten Borsten) kann vorzugsweise bei 0, 1 mm bis 2,0 mm liegen.

Außerdem ist es möglich, dass die Borsten in axialer Richtung und/oder in Umfangsrichtung versetzt zueinander angeordnet sind, wobei die axiale Richtung und die Umfangsrichtung jeweils auf eine zentrale Mittenlängsachse des Bürstchens bezogen sind. Insbesondere können die Fußbereiche benachbarter Borsten in axialer Richtung und/oder Umfangsrichtung betrachtet überlappen oder um einen geringen Fußabstand von höchstens 4,5 mm insbesondere höchstens 2,0 mm und vorzugsweise von höchstens 0,5 mm in axialer Richtung und/oder höchstens 90° insbesondere höchstens 10° und vorzugsweise höchstens 2,5° in Umfangsrichtung voneinander beabstandet sein. Dadurch ergibt sich eine sehr hohe Strukturierungsdichte, die sich aber dennoch mittels der Sandwich-Technologie herstellen lässt.

Wenn das Sandwich-Spritzgussteil als ein Abstreifer für den Applikator einer Kosmetikeinheit, z.B. einer Mascara-Einheit, ausgebildet ist, kann es mit Vorteil vorgesehen sein, dass die äußere Kunststoff-Komponente weicher als die innere Kunststoff-Komponente ist. Die weichere äußere Kunststoff-Komponente ist dann vorzugsweise auch innerhalb eines Dichtbereichs angeordnet. Sie dient dort vor allem zur Erhöhung der Dichtwirkung zwischen einem Behälter, in den der Abstreifer eingesetzt ist, und einer Verschlusskappe. An einer axialen Stirnseite des Abstreifers kann eine angeformte Dichtscheibe mit einer axialen Dicke zwischen 0,6 mm und 3,0 mm gebildet sein. Damit ist es möglich, den Behälter ohne Sicherheitsspalt auslaufdicht mit der Verschlusskappe zu verschließen.

Zusätzlich bzw. alternativ kann durch die weichere äußere Kunststoff-Komponente auch eine Abstreiflippe gebildet sein.

Wenn das Sandwich-Spritzgussteil als ein Behälter ausgebildet ist, kann es mit Vorteil vorgesehen sein, dass die äußere Kunststoff-Komponente, wie dies beispielsweise bei Teflon bekannt ist, reibungsvermindernd wirkt und insbesondere einen niedrigeren Reibungskoeffizienten hat als die innere Kunststoff-Komponente. Günstig ist es, wenn diese reibungsvermindernde äußere Kunststoff-Komponente auch innerhalb eines Gewindebereichs des Behälters angeordnet ist, um dort eine leicht gängige Gewindeverbindung z.B. mit einer Verschlusskappe zu bilden. Dementsprechend kann auch ein korrespondierender Gewindebereich einer ebenfalls als zweikomponentiges Sandwich-Spritzgussteil ausgeführten Verschlusskappe bevorzugt aus einer ähnlich reibungsvermindernden äußeren Kunststoff-Komponente bestehen.

Allgemein kann durch entsprechende Auswahl der äußeren Kunststoff-Komponente eine bestimmte Oberflächenfunktion, beispielsweise visuelle Transparenz, Transluzenz, ein milchglasartiges Erscheinungsbild, eine Einfärbung oder ein bestimmter Reflexionsgrad, wie z.B. eine besonders hohe oder besonders niedrige Reflexion, zielgenau eingestellt werden. Bezüglich der haptischen Eigenschaften kann die Oberfläche weich, glatt, sich warm oder kalt anfühlend ausgebildet werden. In mechanischer Hinsicht kann die Oberfläche kratzfest, antihaftbeschichtet oder eine besonders gute Benetzung aufweisend ausgebildet werden.

Insbesondere kann bei dem als Sandwich-Spritzgussteil ausgeführten Behälter die im fertigen Zustand äußere Kunststoff-Komponente transparent, transluzent oder eingefärbt sein, um einen ansprechenden optischen Effekt zu erzielen. Darüber hinaus können auch Barrierewerkstoffe eingesetzt werden.

Nachfolgend wird die Erfindung anhand von Ausführungsbeispielen von Teilen einer Kosmetikeinheit in Verbindung mit der Zeichnung näher erläutert. Dabei zeigen:
- Fig. 1: einen Längsschnitt durch ein erstes Ausführungsbeispiel eines Mascara-Bürstchens einer Mascara-Einheit,
- Fig. 2: eine vergrößerte Darstellung des in Fig. 1 eingezeichneten Ausschnitts C,
- Fig. 3: ein zweites Ausführungsbeispiel eines Mascara-Bürstchens in einer Längsschnittdarstellung,
- Fig. 4: eine teilweise aufgeschnittene Seitenansicht eines Ausführungsbeispiels eines Behälters einer Mascara-Einheit,
- Fig. 5: einen Längsschnitt durch ein Ausführungsbeispiel einer Abstreifeinrichtung einer Mascara-Einheit, und
- Fig. 6: einen Längsschnitt durch ein Ausführungsbeispiel eine einen Stiel umfassenden Verschlusseinheit einer Mascara-Einheit.

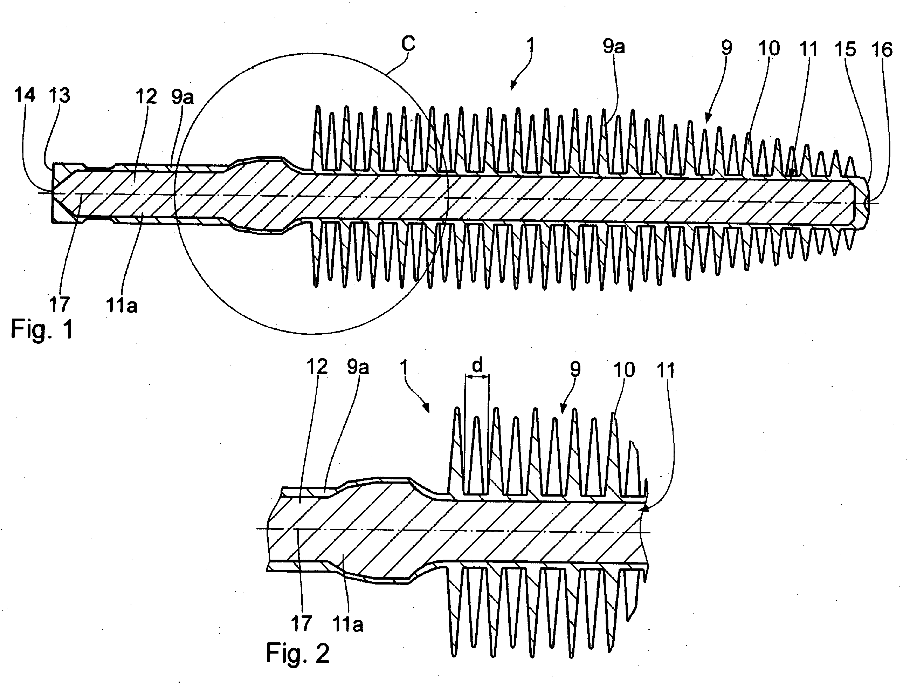

Die in der Zeichnung dargestellten Teile einer Kosmetikeinheit, insbesondere einer Mascara-Einheit, können sämtliche wie nachfolgend beschrieben im Zwei-Komponenten-Sandwich-Verfahren hergestellt sein. Es handelt sich also jeweils um ein Sandwich-Spritzgussteil. Grundsätzlich braucht dieses günstige Herstellungsverfahren aber nicht bei allen Teilen der Mascara-Einheit zum Einsatz kommen. Mit besonderem Vorteil lässt es sich bei den in Fig. 1 bis 3 gezeigten Mascara-Bürstchen 1 bzw. 1' verwenden. Teile anderer nicht gezeigter Kosmetikeinheiten können ebenfalls mittels des günstigen Zwei-Komponenten-Sandwich-Verfahren gefertigt sein.

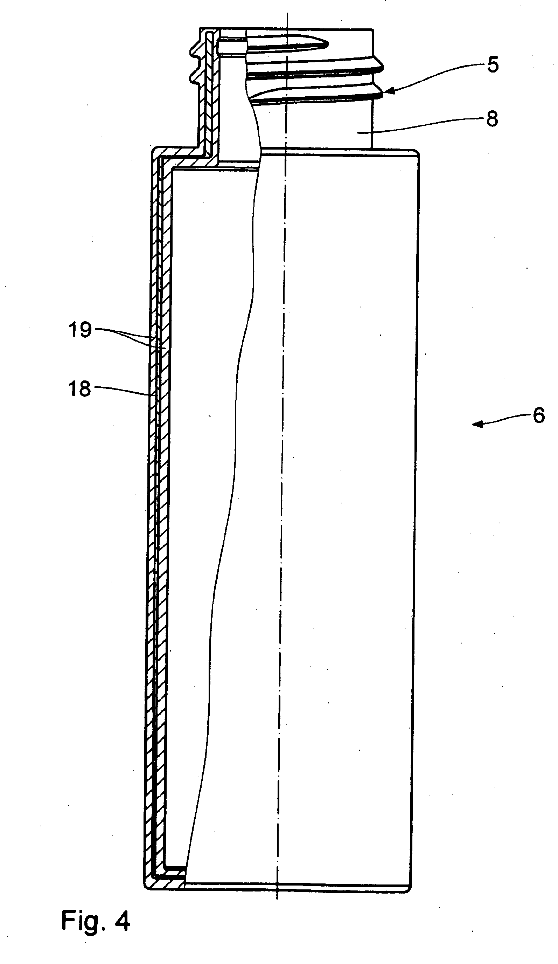

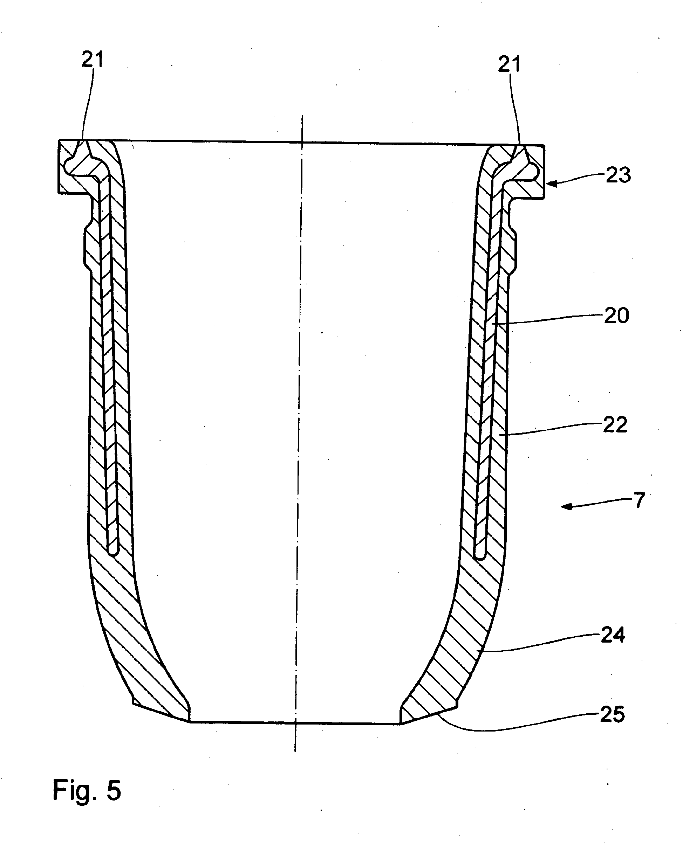

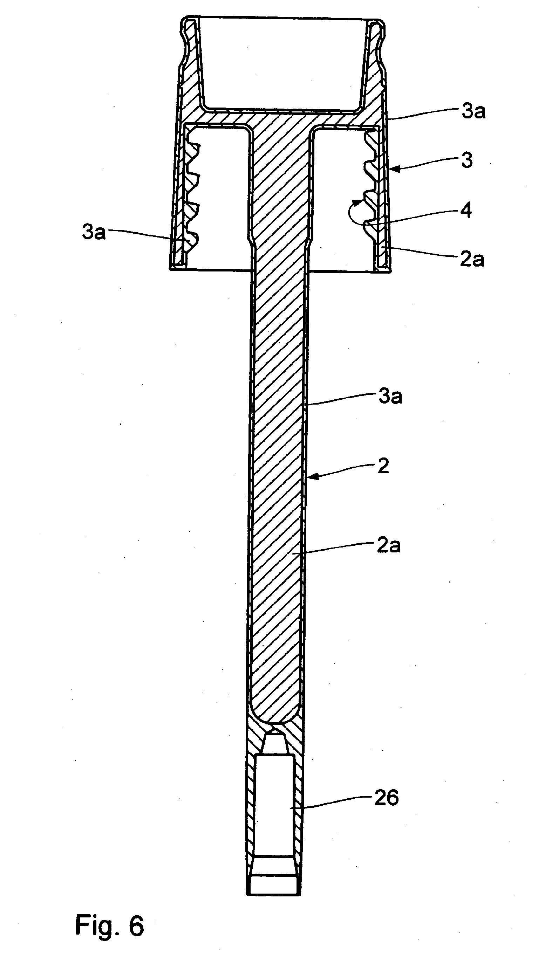

Bei einer kompletten Kosmetikeinheit ist ein Mascara-Bürstchen 1 (siehe Fig. 1 und 2) an einem Stiel 2 einer Verschluss- oder Schraubkappe 3 (siehe Fig. 6) mit Innengewinde 4 befestigt, welches auf ein Außengewinde 5 eines Behälters 6 (siehe Fig. 4) aufgeschraubt werden kann, wobei eine Abstreifeinrichtung 7 (siehe Fig. 5) in einen Hals 8 des Behälters 6 eingesetzt ist.

Bei dem in Fig. 1 dargestellten Ausführungsbeispiel eines Mascara-Bürstchens 1 ist ein Borstenbesatz 9 durch eine Mehrzahl von Borsten 10 gebildet und besteht aus einer weicheren äußeren Kunststoff-Komponente 9a, die einen Kern 11 aus einer härteren inneren Kunststoff-Komponente 11 a umschließt. Der Kern 11 weist einstückig mit diesem im Bereich jenseits des Besatzes 9 einen Stielansatz 12 auf, wobei an einer in der Zeichnung linken axialen Stirnseite 13 des Kerns 11 bzw. des Stielansatzes 12 ein einziger gemeinsamer Anspritzpunkt 14 vorgesehen ist.

Mittels dieses Anspritzpunktes 14 ist zunächst die weichere äußere Kunststoff-Komponente 9a in eine nicht gezeigte Spritzgießform und danach die härtere innere Kunststoff-Komponente 11a in die noch nicht ausgehärtete weichere äußere Kunststoff-Komponente 9a eingespritzt worden. Dadurch ergibt sich ein inniger und insbesondere spaltfreier Verbund zwischen den beiden Kunststoff-Komponenten 9a und 11a. In einem Verbindungsbereich sind die beiden Kunststoff-Komponenten 9a und 11a konturgenau aneinander angepasst, wobei sich dieser hohe Übereinstimmungsgrad in der Kontur- bzw. Grenzflächengeometrie vorteilhafterweise automatisch aufgrund des verwendeten Zwei-Komponenten-Sandwich-Verfahrens einstellt. Die so erzielte auch formschlüssige Verbindung zwischen den Kunststoff-Komponenten 9a und 11a ist besonders fest und dauerhaft stabil, ohne dass zusätzliche Sicherungsmaßnahmen erforderlich sind.

An der anderen Stirnseite 15 ist ein Angriffspunkt 16 vorgesehen, an dem ein nicht näher gezeigter Auswerfer nach Abschluss des Spritzgießvorgangs angreift, um das fertig gespritzte und ausgehärtete Bürstchen 1 aus der Spritzgießform auszuwerfen.

Wie insbesondere aus Fig. 2 deutlich wird, weisen die Borsten 10 zum freien Ende hin eine konische Verjüngung auf. Die Borsten 10 stehen eng beieinander. In axialer Richtung, d.h. in Richtung einer zentralen Mittenlängsachse 17, liegt zwischen Fußbereichen benachbarter Borsten ein Abstand d von nur 0,20 mm. Trotz dieser sehr feinen Strukturierung kann das erfindungsgemäß vorgesehene Zwei-Komponenten-Sandwich-Verfahren verwendet werden.

Aus Fig. 1 wird deutlich, dass die weichere, äußere Kunststoff-Komponente 9a, aus der auch die Borsten 10 bestehen, die innere härtere Kunststoff-Komponente 11a des Kerns 11 und des Stielansatzes 12 mit Ausnahme einer kleinen Lücke beim Anspritzpunkt 14 im Wesentlichen vollständig umgibt.

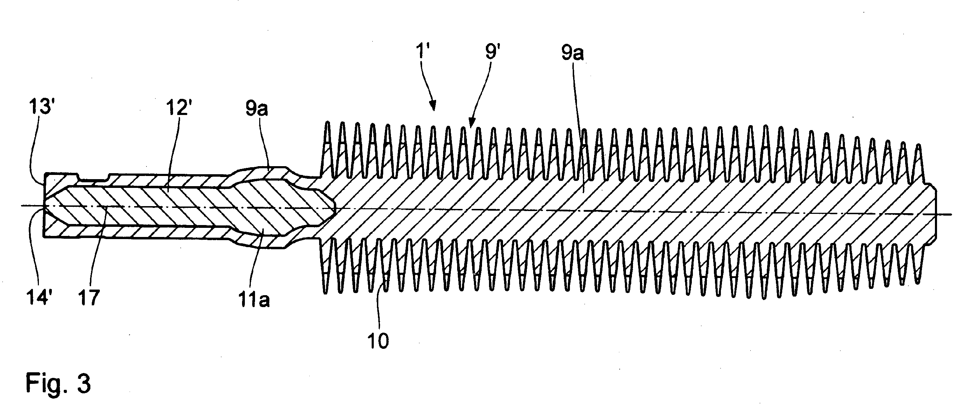

In Fig. 3 ist ein anderes Ausführungsbeispiel eines Bürstchens 1' dargestellt, welches sich von dem Bürstchen 1 nach Fig. 1 dadurch unterscheidet, dass der Kernbereich des Besatzes 9' aus dem gleichen Material besteht wie die Borsten 10, also ebenfalls aus der weicheren Kunststoff-Komponente 9a. Lediglich der Stielansatz 12' umfasst auch die härtere Kunststoff-Komponente 11a, die mit Ausnahme des Anspritzpunktes 14' von der äußeren weicheren Komponente 9a vollständig umgeben ist.

Der Auswerfer greift bei diesem Ausführungsbeispiel vorzugsweise im Bereich des Anspritzpunktes 14' an der hinteren Stirnseite 13' des Stielansatzes 12' an.

Der in Fig. 4 dargestellte Behälter 6 umfasst zwei Kunststoff-Komponenten, nämlich eine innere tragende Kunststoff-Komponente 18, die sowohl innen als auch außen vollständig von einer zweiten Kunststoff-Komponente 19 umgeben ist.

Ein in Fig. 5 dargestellter Abstreifer 7 weist eine innere, härtere tragende Kunststoff-Komponente 20 auf, die bis auf die Anspritzpunkte (bzw. einen Anspritzring) 21 vollkommen von einer weichen Kunststoff Komponente 22 umgeben ist.

Die weichere Kunststoff-Komponente 22 ist im Dichtbereich 23 und im Bereich der Abstreiflippen 24 besonders vorteilhaft. Der Auswerfer greift am freien stirnseitigen Ende 25 der Abstreiflippen 24 an.

In Fig. 6 ist eine Verschlusseinheit bestehend aus einem Stiel 2 mit einer Ausnehmung 26 zur Befestigung eines Applikators, z.B. eines der Mascara-Bürstchen 1 und 1', dargestellt, an dessen oberen Ende eine Verschluss- bzw. Schraubkappe 3 mit einem Innengewinde 4 einstückig angeformt ist.

Das Innere des Stiels 2 und der Schraubkappe 3 wird durch eine härtere Kunststoff-Komponente 2a gebildet, die vollständig von einer weicheren Kunststoff-Komponente 3a umgeben ist, die im Bereich des Innengewindes 4 die Reibung herabsetzt und außerdem ein Einrasten des Applikators in die Ausnehmung 26 erleichtert.

Außer den vorstehend konkret in der Zeichnung beschriebenen Ausführungsformen sind noch zahlreiche weitere vorteilhafte Ausführungsformen von jeweils als Sandwich-Spritzgussteil ausgeführten Teilen verschiedener Kosmetikeinheiten erfindungsgemäβ denkbar.

Beispielsweise ist aus EP 1 348 352 B 1 eine sogenannte "Duo-Kosmetikeinheit" bekannt, bei der zwei unterschiedliche Applikatoren beiderseits einer zentralen Hülse angeordnet sind. Auch diese Hülse kann vorteilhaft als Sandwich-Spritzgussteil ausgestaltet sein umfassend eine härtere, steifere innere Materialkomponente und eine äußere Materialkomponente, die eine gewünschte Haptik ermöglicht, die beispielsweise für Kratzfestigkeit sorgen kann, und die optisch transparent, transluzent oder eingefärbt sein kann. Der Anspritzpunkt liegt dabei vorzugsweise im Bereich der Zwischenwand der Hülse in Form eines Punktangusses, eines Ringangusses oder eines Nadelverschlussangusses. Im fertigen Zustand kann die härtere Materialkomponente im Bereich des Anspritzpunktes von der zweiten Komponente vollständig überdeckt sein oder aber auch frei hervortreten. Der Auswerfer greift vorzugsweise an der Stirnseite an.

Darüber hinaus können auch die beiderseits auf die Verbindungshülse aufgesetzten Übersteckkappen, welche die Applikatoren abdecken, erfindungsgemäß ausgestaltet sein. Dabei kann ebenfalls der Anspritzpunkt an der Innenseite des Kappenbodens liegen und die zweite Komponente kann wiederum transparent, transluzent oder eingefärbt sein.

Ein weiteres Beispiel ist ein Bürstchen mit im Querschnitt nicht kreisförmigen Borsten, die sich zur Spitze hin verjüngen. Dabei kann vorgesehen sein, dass sich der Querschnitt zur Spitze hin ändert.

Die erfindungsgemäße Technologie kann mit Vorteil auch bei Applikatoren Anwendung finden, die ein Erscheinungsbild haben, als wäre eine Mehrzahl von Scheiben axial nebeneinander aufgereiht.

Überraschend ist, dass mit der beschriebenen Technologie Sandwich-Spritzgussteile mit einem individuellen Gewicht von 0,1 g bis 10 g hergestellt werden können, wobei trotz dieses niedrigen Teilegewichts das Dosiervolumen beider Kunststoff-Komponenten zusammengenommen zwischen 4 cm³ und 80 cm³ liegen kann. Die Gewichtsanteile der einzelnen Kunststoff-Komponenten können stark variieren, z.B. in einem Bereich von 5 % bis 95 %. Das Gewicht des Bürstchens 1 oder 1' kann ebenso wie das des Abstreifers 7 im Bereich zwischen 0, 1 g und 0,8 g, das der Verschlusseinheit mit der Verschluss- bzw. Schraubkappe 3 im Bereich zwischen 1,2 g und 8,0 g und das des Behälters 6 im Bereich zwischen 2,0 g und 10,0 g liegen.

## Patentansprüche

1. Teil einer Kosmetikeinheit, insbesondere Applikator, vorzugsweise Bürstchen (1;1'), Behälter (6), Verschlusskappe (3) oder Abstreifer (7), ausgeführt als ein aus zwei unterschiedlichen Kunststoff-Komponenten (2a, 3a; 9a, 11a; 18, 19; 20, 22) bestehendes Sandwich-Spritzgussteil, wobei
a) eine erste innere Kunststoff-Komponente (2a; 11a; 18; 20) mittels eines einzigen gemeinsamen Anspritzpunktes (14, 14', 21) in eine zweite äußere Kunststoff-Komponente (3a; 9a; 19; 22) eingespritzt ist, so dass
a1) die erste innere Kunststoff-Komponente (2a; 11a; 18; 20) und die zweite äußere Kunststoff-Komponente (3a; 9a; 19; 22) überall konturgenau aneinander anliegen,
a2) ein Verbindungsbereich zwischen der ersten inneren Kunststoff-Komponente (2a; 11a; 18; 20) und der zweiten äußeren KunstStoff-Komponente (3a; 9a; 19; 22) überall spaltfrei ausgebildet ist,
a3) die zweite äußere Kunststoff-Komponente (3a; 9a; 19; 22) die erste innere Kunststoff-Komponente (2a; 11a; 18; 20) höchstens abgesehen von dem Anspritzpunkt (14, 14', 21) vollständig umgibt, und
a4) zwischen der ersten inneren Kunststoff-Komponente (2a; 11a; 18; 20) und der zweiten äußeren Kunststoff-Komponente (3a; 9a;19; 22) ein homogen geschlossener und inniger Verbund sowie eine formschlüssige und ohne zusätzliche Sicherungsmaßnahmen dauerhaft stabile Verbindung vorliegen, und
b) das Sandwich-Spritzgussteil (1; 1'; 3; 6; 7) ein Gesamtgewicht von höchstens 10 g hat.

2. Teil einer Kosmetikeinheit nach Anspruch 1, **dadurch gekennzeichnet, dass** die beiden Kunststoff-Komponenten (2a, 3a; 9a, 11a; 18, 19; 20, 22) jeweils eine Härte haben, die im Bereich zwischen Shore A 40 und Shore D 95 liegt.

3. Teil einer Kosmetikeinheit nach Anspruch 1, **dadurch gekennzeichnet, dass** die zweite äußere Kunststoff-Komponente (3a; 9a; 19; 22) weicher als die erste innere Kunststoff Komponente (2a; 11a; 18; 20) ist.

4. Teil einer Kosmetikeinheit nach Anspruch 1, **dadurch gekennzeichnet, dass** die zweite äußere Komponente (3a; 9a; 19; 22) transparent oder transluzent ist.

5. Teil einer Kosmetikeinheit nach Anspruch 1, **dadurch gekennzeichnet, dass** die zweite äußere Kunststoff-Komponente (3a; 9a; 19; 22) einen niedrigeren Reibungskoeffizienten als die erste innere Kunststoff-Komponente (2a; 11a; 18; 20) hat.

6. Teil einer Kosmetikeinheit nach Anspruch 1, **dadurch gekennzeichnet, dass** das Sandwich-Spritzgussteil als Bürstchen (1; 1') ausgeführt ist und der Anspritzpunkt (14; 14') im Bereich einer Stirnseite (13) eines Kerns (11) des Bürstchens (1, 1') oder seitlich an einem Stielansatz (12; 12') des Bürstchens (1, 1') vorgesehen ist.

7. Teil einer Kosmetikeinheit, nach Anspruch 6, **dadurch gekennzeichnet, dass** ein Angriffspunkt (16) eines Auswerfers zum Auswerfen des gespritzten Bürstchens (1) aus einer Spritzgießform an der Stirnseite (13) des Kerns (11) oder an dem Stielansatz (12') liegt.

8. Teil einer Kosmetikeinheit nach Anspruch 6, **dadurch gekennzeichnet, dass** auch der Stielansatz (12) des Bürstchens (1; 1') teilweise aus der ersten Kunststoff-Komponente (11a) besteht und von der zweiten Kunststoff-Komponente (9a) umgeben ist.

9. Teil einer Kosmetikeinheit nach Anspruch 6, dadurch gekenonichnet, dass das Bürstchen (1; 1') einen Borstenbesatz (9; 9') mit bis zu 2.000 Borsten (10) aufweist, wobei ein Borstenabstand zwischen benachbarten Borsten (10) insbesondere zwischen 0,1 mm und 2,0 mm liegt.

10. Teil einer Kosmetikeinheit nach Anspruch 9, **dadurch gekennzeichnet, dass** das Bürstchen (1; 1') eine zentrale Mittenlängsachse (17) aufweist und Fußbereiche benachbarter Borsten (10) in bezogen auf die Mittenlängsachse (17) axialer Richtung und/oder Umfangsrichtung betrachtet überlappen oder um einen geringen Fußabstand (d) von höchstens 4,5 mm in axialer Richtung und/oder von höchstens 90° in Umfangsrichtung voneinander beabstandet sind.

11. Teil einer Kosmetikeinheit nach Anspruch 1 **dadurch gekennzeichnet, dass** das Sandwich-Spritzgussteil als Abstreifer (7) für einen Applikator einer Kosmetikeinheit insbesondere für ein Bürstchen (1; 1'), ausgeführt ist, die zweite äußere Kunststoff-Komponente (22) weicher als die erste innere Kunststoff-Komponente (20) ist und die zweite äußere Kunststoff-Komponente (22) innerhalb eines Dichtbereichs (23) angeordnet ist, welcher Dichtbereich (23) bei in einen Hals (8) eines Behälters (6) eingesetztem Abstreifer (7) eine Abdichtwirkung zwischen dem Behälter (6) und einer Verschlusskappe (3) bewirkt.

12. Teil einer Kosmetikeinheit nach Anspruch 1 **dadurch gekennzeichnet, dass** das Sandwich-Spritzgussteil als Abstreifer (7) für einen Applika tor einer Kosmetikeinheit; insbesondere für ein Bürstchen (1; 1'), ausgeführt ist, die zweite äußere Kunststoff-Komponente (22) weicher als die erste innere Kunststoff-Komponente (20) ist und eine Abstreiflippe (24) des Abstreifers (7) aus der zweiten äußeren Kunststoff-Komponente (22) gebildet ist.

13. Teil einer Kosmetikeinheit, nach Anspruch 1, **dadurch gekennzeichnet, dass** das Sandwich-Spritzgussteil als Behälter (6) ausgeführt ist, die zweite äußere Kunststoff-Komponente (19) einen niedrigeren Reibungskoeffizienten als die erste innere Kunststoff-Komponente (18) hat und die zweite äußere Kunststoff-Komponente (19) innerhalb eines Gewindebereichs (5) des Behälters (6) angeordnet ist.

14. Teil einer Kosmetikeinheit nach Anspruch 1, **dadurch gekennzeichnet, dass** das Sandwich-Spritzgussteil als Behälter (6) ausgeführt ist, und die zweite äußere Komponente (19) transparent oder transluzent ist.

15. Teil einer Kosmetikeinheit nach Anspruch 1, **dadurch gekennzeichnet, dass** das Sandwich-Spritzgussteil als Verschlusskappe (3) ausgeführt ist, die zweite äußere Kunststoff Komponente (3a) einen niedrigeren Reibungskoeffizienten als die erste innere Kunststoff-Komponente (2a) hat und die zweite äußere Kunststoff-Komponente (3a) innerhalb eines Gewindebereichs (4) der Verschlusskappe (3) angeordnet ist.

## Claims

1. Part of a cosmetic unit, in particular an applicator, preferably a brush (1; 1'), container (6), closure cap (3) or wiper (7), formed as a sandwich injection-moulded part consisting of two different plastic components (2a, 3a; 9a, 11a; 18, 19; 20, 22), wherein
a) a first inner plastic component (2a; 11a; 18; 20) is injected by means of a single joint injection point (14, 14', 21) into a second outer plastic component (3a; 9a; 19; 22), so that
a1) the first inner plastic component (2a; 11 a; 18; 20) and the second outer plastic component (3a; 9a; 19; 22) precisely rest against each other everywhere with regard to their contours,
a2) a connecting area is formed between the first inner plastic component (2a; 11 a; 18; 20) and the second outer plastic component (3a; 9a; 19; 22) so as to be free of gaps everywhere,
a3) the second outer plastic component (3a; 9a; 19; 22) completely encloses the first inner plastic component (2a; 11a; 18; 20), with the exception, at most, of the injection point (14, 14', 21), and
a4) there exist, between the first inner plastic component (2a; 11 a; 18; 20) and the second plastic component (3a; 9a; 19; 22), a homogeneously sealed and intimate bond and a positive-fit connection which is permanently stable without additional safeguards, and
b) the sandwich injection-moulded part (1; 1'; 3; 6; 7) has a total weight of at most 10 g.

2. Part of a cosmetics unit according to claim 1, **characterised in that** the two plastic components (2a, 3a; 9a, 11a; 18, 19; 20, 22) each have a hardness that lies in the range of between Shore A 40 and Shore D 95.

3. Part of a cosmetics unit according to claim 1, **characterised in that** the second outer plastic component (3a; 9a; 19; 22) is softer than the first inner plastic component (2a; 11a; 18; 20).

4. Part of a cosmetics unit according to claim 1, **characterised in that** the second outer component (3a; 9a; 19; 22) is transparent or translucent.

5. Part of a cosmetics unit according to claim 1, **characterised in that** the second outer plastic component (3a; 9a; 19; 22) has a lower friction coefficient than the first inner plastic component (2a; 11a;18; 20).

6. Part of a cosmetics unit according to claim 1, **characterised in that** the sandwich injection-moulded part is formed as a brush (1; 1') and that the injection point (14; 14') is provided in the area of an end face (13) of a core (11) of the brush (1, 1') or laterally on a base (12; 12') of the stem of the brush (1; 1').

7. Part of a cosmetics unit according to claim 6, **characterised in that** a point of action (16) of an ejector for ejecting the injection-moulded brush (1) from an injection mould lies at the end face (13) of the core (11) or at the base (12') of the stem.

8. Part of a cosmetics unit according to claim 6, **characterised in that** the base (12) of the stem of the brush (1; 1') also partially consists of the first plastic component (11a) and is enclosed by the second plastic component (9a).

9. Part of a cosmetics unit according to claim 6, **characterised in that** the brush (1; 1') has a bristle covering (9; 9') with up to 2,000 bristles (10), wherein a bristle distance of adjacent bristles (10) is in particular between 0.1 mm and 2.0 mm.

10. Part of a cosmetics unit according to claim 9, **characterised in that** brush (1; 1') has a central longitudinal axis (17) and that base areas of adjacent bristles (10), as viewed in the, relative to the central longitudinal axis (17), axial direction and/or circumferential direction, overlap, or that they are spaced from one another by a small base distance (d) of 4.5 mm at most in the axial direction, and/or by 90° at most in the circumferential direction.

11. Part of a cosmetics unit according to claim 1, **characterised in that** the sandwich injection-moulded part is formed as a wiper (7) for an applicator of a cosmetics unit, in particular for a brush (1;1'), the second outer plastic component (22) is softer than the first inner plastic component (20), and the second outer plastic component (22) is disposed within a sealing area (23), which sealing area (23) causes a sealing effect between the container (6) and a closure cap (3) when the wiper (7) is inserted in a neck (8) of a container (6).

12. Part of a cosmetics unit according to claim 1, **characterised in that** the sandwich injection-moulded part is formed as a wiper (7) for an applicator of a cosmetics unit, in particular for a brush (1;1'), the second outer plastic component (22) is softer than the first inner plastic component (20), and a wiper lip (24) of the wiper (7) is formed from the second outer plastic component (22).

13. Part of a cosmetics unit according to claim 1, **characterised in that** the sandwich injection-moulded part is formed as a container (6), the second outer plastic component (19) has a lower friction coefficient than the first inner plastic component (18), and the second outer plastic component (19) is disposed within a threaded area (5) of the container (6).

14. Part of a cosmetics unit according to claim 1, **characterised in that** the sandwich injection-moulded part is formed as a container (6), and the second outer component (19) is transparent or translucent.

15. Part of a cosmetics unit according to claim 1, **characterised in that** the sandwich injection-moulded part is formed as a closure cap (3), the second outer plastic component (3a) has a lower friction coefficient than the first inner plastic component (2a), and the second outer plastic component (3a) is disposed within a threaded area (4) of the closure cap (3).

## Revendications

1. Partie d'une unité cosmétique, en particulier applicateur, de préférence brosse (1 ; 1'), récipient (6), capuchon de fermeture (3) ou raclette (7), réalisée sous la forme d'une pièce injectée en sandwich composée de deux composantes différents en matière plastique (2a, 3a; 9a, 11 a ; 18, 19 ; 20, 22), dans laquelle
a) une première composante intérieure en matière plastique (2a ; 11a ; 18 ; 20) est injectée au moyen d'un point d'injection commun unique (14, 14', 21) dans une seconde composante extérieure en matière plastique (3a ; 9a ; 19 ; 22), de telle sorte que
a1) la première composante intérieure en matière plastique (2a ; 11 a ; 18 ; 20) et la seconde composante extérieure en matière plastique (3a ; 9a ; 19 ; 22) s'appliquent l'une contre l'autre par tour exactement vis-à-vis de leurs contours,
a2) une zone de liaison est réalisée partout sans intervalle entre la première composante intérieure en matière plastique (2a ; 11a ; 18 ; 20) et la seconde composante extérieure en matière plastique (3a ; 9a ; 19 ; 22),
a3) la seconde composante extérieure en matière plastique (3a ; 9a ; 19 ; 22) entoure totalement la première composante intérieure en matière plastique (2a ; 11a ; 18 ; 20), au maximum à l'exception du point d'injection (14, 14', 21), et
a4) entre la première composante intérieure en matière plastique (2a ; 11a ; 18 ; 20) et la seconde composante extérieure en matière plastique (3a ; 9a ; 19; 22) il se présente un composite intime fermé homogène ainsi qu'une liaison à coopération de formes durablement stable sans mesure de blocage supplémentaire, et
b) la pièce injectée en sandwich (1 ; 1'; 3 ; 6 ; 7) a au maximum un poids total de 10 g.

2. Partie d'une unité cosmétique selon la revendication 1, **caractérisée en ce que** les deux composantes en matière plastique (2a, 3a ; 9a, 11a ; 18, 19 ; 20, 22) présentent chacune une dureté qui tombe dans la plage entre Shore A 40 et Shore D 95.

3. Partie d'une unité cosmétique selon la revendication 1, **caractérisée en ce que** la seconde composante extérieure en matière plastique (3a ; 9a ; 19 ; 22) est plus tendre que la première composante intérieure en matière plastique (2a ; 11a ; 18 ; 20).

4. Partie d'une unité cosmétique selon la revendication 1, **caractérisée en ce que** la seconde composante extérieure (3a ; 9a ; 19 ; 22) est transparente ou translucide.

5. Partie d'une unité cosmétique selon la revendication 1, **caractérisée en ce que** la seconde composante extérieure en matière plastique (3a ; 9a ; 19 ; 22) présente un coefficient de friction inférieure à première composante intérieure en matière plastique (2a; 11a ; 18 ; 20).

6. Partie d'une unité cosmétique selon la revendication 1, **caractérisée en ce que** la pièce injectée en sandwich est réalisée sous forme de brosse (1 ; 1'), et le point d'injection (14 ; 14') est prévu dans la région d'un côté frontal (13) d'un noyau (11) de la brosse (1, 1') ou latéralement sur un talon du manche (12 ; 12') de la brosse (1, 1').

7. Partie d'une unité cosmétique selon la revendication 6, **caractérisée en ce qu'**un point d'attaque (16) d'un éjecteur pour éjecter la brosse injectée (1) hors d'un moule d'injection est situé sur la face frontale (13) du noyau (11) ou sur le talon du manche (12').

8. Partie d'une unité cosmétique selon la revendication 6, **caractérisée en ce que** le talon du manche (12) de la brosse (1 ; 1') est également partiellement formé par la première composante en matière plastique et est entouré par la seconde composante en matière plastique (9a).

9. Partie d'une unité cosmétique selon la revendication 6, **caractérisée en ce que** la brosse (1 ; 1') comporte une garniture de brosse (9 ; 9') avec jusqu'à 2000 poils (10), dans laquelle une distance entre des poils voisins (10) est comprise en particulier entre 0,1 mm et 2,0 mm.

10. Partie d'une unité cosmétique selon la revendication 9, **caractérisée en ce que** la brosse (1 ; 1') présente un axe longitudinal médian central (17), et les régions des pieds de poils voisins (10), en direction axiale par référence à l'axe longitudinal médian (17) et/ou considérées en direction périphérique, se chevauchent ou sont écartées les unes des autres d'une faible distance au pied (d) de 4,5 mm au maximum en direction axiale et/ou au maximum de 90° en direction périphérique.

11. Partie d'une unité cosmétique selon la revendication 1, **caractérisée en ce que** la pièce injectée en sandwich est réalisée comme une raclette (7) pour un applicateur d'une unité cosmétique, en particulier pour une brosse (1 ; 1'), la seconde composante extérieure en matière plastique (22) est plus tendre que la première composante intérieure en matière plastique (20), et la seconde composante extérieure en matière plastique (22) est agencée à l'intérieur d'une zone d'étanchéité (23), ladite zone d'étanchéité (23) assurant un effet d'étanchement entre un récipient (6) et un capuchon de fermeture (3) lorsque la raclette (7) est mise en place dans un goulot (8) du récipient (6).

12. Partie d'une unité cosmétique selon la revendication 1, **caractérisée en ce que** la pièce injectée en sandwich est réalisée comme une raclette (7) pour un applicateur d'une unité cosmétique, en particulier pour une brosse (1 ; 1'), la seconde composante extérieure en matière plastique (22) est plus tendre que la première composante intérieure en matière plastique (20), et une lèvre de raclage (24) de la raclette (7) est formée à partir de la seconde composante extérieure en matière plastique (22).

13. Partie d'une unité cosmétique selon la revendication 1, **caractérisée en ce que** la pièce injectée en sandwich est réalisée comme un récipient (6), la seconde composante extérieure en matière plastique (19) présente un coefficient de friction plus faible que la première composante intérieure en matière plastique (18), et la seconde composante extérieure en matière plastique (19) est agencée à l'intérieur d'une zone à pas de vis (5) du récipient (6).

14. Partie d'une unité cosmétique selon la revendication 1, **caractérisée en ce que** la pièce injectée en sandwich est réalisée comme un récipient (6), et la seconde composante extérieure (19) est transparente ou translucide.

15. Partie d'une unité cosmétique selon la revendication 1, **caractérisée en ce que** la pièce injectée en sandwich est réalisée comme un capuchon de fermeture (3), la seconde composante extérieure en matière plastique (3a) présente un coefficient de friction plus faible que la première composante intérieure en matière plastique (2a), et la seconde composante extérieure en matière plastique (3a) est agencée à l'intérieur d'une zone à pas de vis (4) du capuchon de fermeture (3).
